**Europäisches Patentamt**

**European Patent Office**

**Office européen des brevets**

(19)

(11) Veröffentlichungsnummer: **0 263 396 B1**

(12) **EUROPÄISCHE PATENTSCHRIFT**

(45) Veröffentlichungstag der Patentschrift: **11.09.91**

(51) Int. Cl.5: **H02B 11/167**

(21) Anmeldenummer: **87114150.3**

(22) Anmeldetag: **28.09.87**

(54) **Schalterwagen für ein gekapseltes elektrisches Schaltfeld.**

(30) Priorität: **10.10.86 DE 8626952 U**

(43) Veröffentlichungstag der Anmeldung:
**13.04.88 Patentblatt 88/15**

(45) Bekanntmachung des Hinweises auf die
Patenterteilung:
**11.09.91 Patentblatt 91/37**

(84) Benannte Vertragsstaaten:
**AT DE GB NL**

(56) Entgegenhaltungen:
**FR-A- 2 113 894**
**FR-A- 2 156 474**

**SIEMENS: "Hochspannungs-Anlagen mit Innenraumgeräten, metallgekapselt Schütz-
Wagenanlagen 8BD2 bis 7,2 kV, Nachtrag
Juni 1980 zum Katalog HA 22, Seiten 2-11,
Siemens AG, DE**

(73) Patentinhaber: **Siemens Aktiengesellschaft
Wittelsbacherplatz 2
W-8000 München 2(DE)**

(72) Erfinder: **Poth, Rainer
Freiherr-vom-Stein-Strasse 2
W-6368 Bad Vilbel(DE)**

Rank Xerox (UK) Business Services

## Beschreibung

Die Erfindung bezieht sich auf einen Schalterwagen für ein gekapseltes elektrisches Schaltfeld nach dem Oberbegriff des Anspruches 1.

Es ist bereits ein Schalterwagen für ein gekapseltes elektrisches Schaltfeld der im Oberbegriff des Anspruches 1 genannten Art bekannt. Der Schalterwagen weist zwei zueinander parallele Seitenwände auf und ist rückseitig offen. Die Seitenwände sind für einen Zugang zu den zwischen ihnen angeordneten Einbauten stellenweise ausgenommen und gemeinsamer Träger der Einbauten (Siemens, metallgekapselte SchützWagenanlagen 8BD2 bis 7,2 KV, Nachtrag Juni 198o zum Katalog HA 22 und FR-A-2 113 894).

Aufgabe der Erfindung ist es, den Schalterwagen für ein gekapseltes elektrisches Schaltfeld der im Oberbegriff des Anspruches 1 genannten Art besonders schmal sowie noch montage- und wartungsfreundlicher zu gestalten.

Die gestellte Aufgabe wird erfindungsgemäß durch die im kennzeichnenden Teil des Anspruches 1 angegebene Ausbildung gelöst.

Eine zweckmäßige Aus- und Weiterbildung des Erfindungsgegenstandes ist im Anspruch 2 angegeben.

Durch die Verwendung nur einer Seitenwand und die Verwendung dieser Seitenwand als alleiniger Träger der Einbauten, ist der erfindungsgemäße Schalterwagen besonders schmal zu bauen. Das Fehlen einer zweiten Seitenwand erlaubt einen unbehinderten Zugang zu den Einbauten des Schalterwagens. Die Einbauten selbst sind besonders übersichtlich angeordnet und können schon an der Seitenwand vormontiert werden, bevor diese mit dem Schalterwagen vereinigt wird.

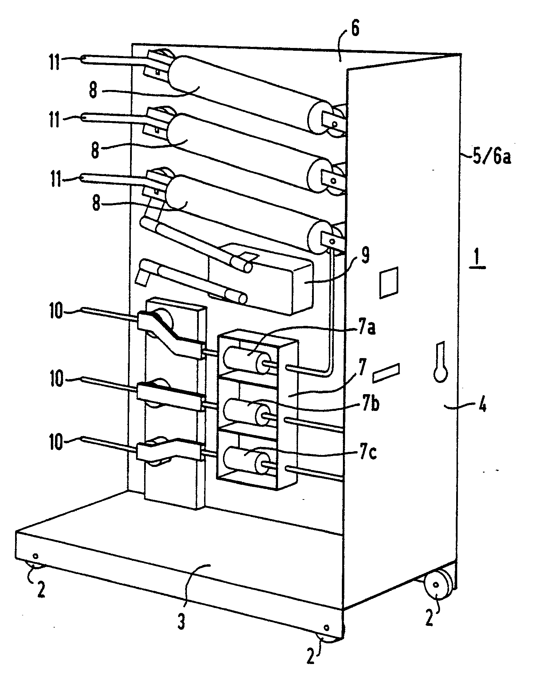

Ein Ausführungsbeispiel der Erfindung ist in der Zeichnung rein schematisch in einer perspektivischen Darstellung gezeigt.

In der Zeichnung ist ein Schalterwagen eines nicht dargestellten elektrischen Schaltfeldes mit 1 bezeichnet, der üblicher Weise mit Rädern versehen ist, die mit 2 bezeichnet sind.

Die Räder 2 sind an einem Fahrboden 3 angeordnet, der einen Frontschild 4 trägt. Der Frontschild 4 ist im vorliegenden Beispiel längs seiner rechten vertikalen Begrenzungskante, die mit 5 bezeichnet ist, mit einer anliegenden vertikalen Begrenzungskante 6a einer Seitenwand 6 verbunden, die aus der rechten Seite des Wagenbodens 3 aufragt. Die Anordnung kann auch spiegelbildlich getroffen sein (nicht dargestellt).

Die Seitenwand 6 ist alleiniger Träger eines Vakuumschützes 7 mit den Polen 7a, 7b, 7c. Die Seitenwand 6 ist ferner alleiniger Träger von Hochspanungs-Hochleistungssicherungen 8 und eines Steuertransformators 9 für die Spulen des Ankers des Vakuumschützes 7.

Die Pole 7a, 7b, 7c des Vakuumschützes 7 liegen dem Wagenboden 3 am nächsten und sind übereinander angeordnet.

Über dem obersten Pol 7a des Vakuumschützes 7 ist der Steuertransformator 9 angeordnet. Die Sicherungen 8 liegen phasenweise über dem Steuertransformator 9 übereinander. Sie verlaufen in Einfahrrichtung des Schalterwagens 1 ansteigend geneigt.

Es ist auch möglich, pro Phase zwei Sicherungen 8 vorzusehen. Diese wären parallel nebeneinander anzuordnen (nicht dargestellt).

In üblicher Weise sind die einzelnen Pole 7a, 7b, 7c des Vakuumschützes 7 mit Einfahrkontaktstücken 1o versehen. Die Sicherungen 8 tragen Einfahrkontaktstücke 11.

## Patentansprüche

1. Schalterwagen für ein gekapseltes elektrisches Schaltfeld, mit den Merkmalen:
   a) ein mit Rädern (2) versehener Wagenboden (3) trägt einen Frontschild (4);
   b) hinter dem Frontschild (4) ist über dem Wagenboden (3) ein mehrpoliges Vakuumschütz (7) angeordnet sowie pro Pol des Vakuumschützes (7) mindestens eine Hochspannungs-Hochleistungssicherung (8) und ferner ein Steuertransformator (9) für die Spulen des Ankers des Vakuumschützes (7);
   c) die Pole des Vakuumschützes (7) und die Sicherungen (8) sind mit Einfahrkontaktstükken (1o,11) versehen, die aus dem Wagenrücken herausragen:
   **gekennzeichnet durch** die Merkmale:
   d) der Frontschild (4) ist längs einer seiner vertikalen Begrenzungskanten (5) mit einer anliegenden vertikalen Begrenzungskante (6a) einer aus dem Wagenboden (3) aufragenden Seitenwand (6) verbunden;
   e) die Seitenwand (6) ist alleiniger Träger des Vakuumschützes (7), der Sicherungen (8) und des Steuertransformators (9);
   f) die Pole (7a, 7b, 7c) des Vakuumschützes (7) liegen nächst dem Wagenboden (3) übereinander;
   g) über dem obersten Pol (7a) des Vakuumschützes (7) ist der Steuertransformator (9) und über dem Steuertransformator (9) sind die Sicherungen (8) angeordnet.

2. Schalterwagen nach Anspruch 1, **dadurch gekennzeichnet**, daß die Sicherungen (8) phasenweise übereinander angeordnet sind.

## Claims

1. A switch truck for an enclosed electric switch panel, with the features:

a) a truck base (3) provided with wheels (2) carries a front plate (4);

b) behind the front plate (4) there is arranged over the truck base (3) a multi-pole vacuum contactor (7), as well as per pole of the vacuum contactor (7) at least one high-voltage high-breaking-capacity fuse (8) and furthermore a control transformer (9) for the coils of the armature of the vacuum contactor (7);

c) the poles of the vacuum contactor (7) and the fuses (8) are provided with isolating contact pieces (10,11), which project from the truck rear;

characterised by the features:

d) the front plate (4) is connected along one of its vertical boundary edges (5) with an adjacent vertical boundary edge (6a) of a side wall (6) projecting from the truck base (3);

e) the side wall (6) is the only carrier of the vacuum contactor (7), of the fuses (8) and of the control transformer (9);

f) the poles (7a, 7b, 7c) of the vacuum contactor (7) lie next to the truck base (3) over each other;

g) above the uppermost pole (7a) of the vacuum contactor (7) is arranged the control transformer (9) and above the control transformer (9) the fuses (8).

2. A switch truck according to claim 1, characterised in that the fuses (8) are arranged over each other in phases.

**Revendications**

1. Chariot porte-interrupteurs pour un panneau de commande électrique blindé, présentant les particularités suivantes:

a) un fond de chariot (3), qui est équipé de roues (2), porte un panneau avant (4);

b) derrière le panneau avant (4) et au-dessus du fond (3) du chariot sont disposés un contact multipolaire sous vide (7) ainsi que, pour chaque pôle du contacteur sous vide (7), au moins un fusible haute tension (8) de grande puissance et en outre un transformateur de commande (9) pour les bobines de l'armature du contacteur sous vide (7);

c) les pôles du contacteur sous vide (7) et les fusibles (8) sont pourvus de pièces de contact d'insertion (10,11), qui font saillie sur l'arrière du chariot,

caractérisé par les moyens suivants:

d) le panneau avant est raccordé, le long de ses bords limites verticaux (5), à un bord limite vertical adjacent (6a) d'une paroi latérale (6) en saillie par rapport au fond (3) du chariot;

e) la paroi latérale (6) est le seul élément supportant le contacteur sous vide (7), les fusibles (8) et le transformateur de commande (9);

f) les pôles (7a,7b,7c) du contacteur sous vide (7) sont directement superposés au-dessus du fond (3) du chariot;

g) le transformateur de commande (9) est disposé au-dessus du pôle le plus élevé (7a) du contacteur sous vide (7) et les fusibles (8) sont disposés au-dessus du transformateur de commande (9).

2. Chariot porte-interrupteurs suivant la revendication 1, caractérisé par le fait que les fusibles (8) sont superposés d'une manière correspondant aux phases.